# EUROPÄISCHE PATENTANMELDUNG

(11) **EP 0 875 976 A1**
(43) Veröffentlichungstag der Anmeldung: **04.11.1998**
(21) Anmeldenummer: 98107951.0
(22) Anmeldetag: 30.04.1998
(51) Int. Cl.: H02G 3/20, F21V 21/02

(54) **Halterung für eine elektrische Einrichtung, insbes. Leuchte**

(30) Priorität: 30.04.1997 DE 29707849 U; 21.07.1997 DE 29712722 U
(71) Anmelder: Steinhauser, Klaus, 97650 Baisweil (DE)
(72) Erfinder: Steinhauser, Klaus, 97650 Baisweil (DE)
(74) Vertreter: Fiener, Josef

(57) **Zusammenfassung**

Zur vereinfachten Ausführung einer Halterung für eine elektrische Einrichtung, insbesondere eine Niedervolt-Leuchte an einer Aufnahmeöffnung, insbesondere einer Wandanschlußdose, wird vorgeschlagen, daß zum Verschließen der Aufnabmeöffnung (2) ein Deckel (10) vorgesehen ist, der an zumindest einer im wesentlichen in der Aufnahmeöffnung (2) angeordneten Halteeinrichtung (12) angesetzt und drehbar gelagert ist, wobei über die Halteeinrichtung (12) und zumindest einen Teil des Deckels (10) ein erster Pol der elektrischen Einrichtung (40; 50) an einer Spannungsquelle (5) angekoppelt ist.

## Beschreibung

Die Erfindung bezieht sich auf eine Halterung für eine elektrische Einrichtung, insbesondere eine Niedervolt-Leuchte, an einer Aufnabmeöffnung.

Bei Leuchten, die an einer Wand oder Decke zu befestigen sind, dient zu deren Befestigung als Halterung im allgemeinen ein Sockel, an dem eine Fassung zur Aufnahme einer Lampe befestigt oder angekoppelt ist. Derartige Sockel ragen jedoch in den Raum hinein, insbesondere bei integriertem Transformator für Niedervoltleuchten, was Platz beansprucht und zudem den ästhetischen Eindruck beim Betrachten der Leuchte stört.

Insbesondere bei Niedervolt-Beleuchtungssystemen ist es bekannt, eine Lampe in eine halbkugelförmige Fassung bzw. Halterung einzusetzen, die wiederum in einer Deckenverkleidung eingelassen ist. Bei solchen Systemen muß jedoch eine spezielle Ausnehmung in einer Decken- oder Wandverkleidungsplatte vorgesehen oder ausgebildet werden, was aufwendig ist.

Bekannt ist ferner, Kabel zur Stromversorgung in Raumwänden unter Putz zu verlegen, wobei in den Wänden Unterputzdosen eingelassen sind, in denen einzelne Kabel oder Kabelstränge enden. Diese Dosen sind mit einfachen, aufsteckbaren Deckeln zum Raum hin verschlossen. Insbesondere in den Räumen von Neubauten ist bei der Elektroinstallation bereits eine Vielzahl solcher Dosen in den Wänden eingesetzt.

Kabel zur Stromversorgung sind in der Regel direkt von einem Transformator oder über Klemmen von stromführenden Schienen zur Lampenfassung geführt und an dieser angeschraubt. Daher besteht ein besonderes Problem bei solchen Lampen zumeist darin, daß sie nicht um 360° oder mehr verschwenkbar sind, damit die Kabel nicht verdrillt werden können und als Folge dessen brechen oder abgerissen werden können.

Der Erfindung liegt die Aufgabe zugrunde, eine verbesserte Halterung für eine elektrische Einrichtung, insbes. Leuchte zu schaffen, die einfach zu montieren ist und zudem vorzugsweise um die eigene Achse verdrehbar sein soll.

Die vorstehende Aufgabe wird gelöst durch eine Halterung gemäß den Merkmalen des Anspruches 1.

Eine solche Halterung ermöglicht einen einfachen Einbau von Leuchten in bereits bestehende Dosen, die in einer Wand eingesetzt sind oder einzusetzen sind. Zudem bietet eine solche Leuchte einen ästhetischeren Anblick, da kein in den Raum ragender Sockel erforderlich ist. Bestehende Dosen- und Kabelkanalsysteme können dabei z. B. zum nachträglichen und/oder zusätzlichen Einbau eines Niedervolt-Beleuchtungssystems verwendet werden. Insbesondere ist dabei der Drehwinkel um die Hauptachse der elektrischen Einrichtung nicht mehr beschränkt.

Weitere vorteilhafte Ausgestaltungen sind Gegenstand von abhängigen Ansprüchen. Insbesondere kann durch die Verwendung einer Schraubenfeder als Schleifkontakt beim Einbau der Halterung eine einfache Anpassung an die Putzstärke oder die Tiefe der Dose in der Wand leicht erfolgen.

Ausführungsbeispiele der Erfindung werden nachstehend anhand der Zeichnung näher erläutert. Es zeigen:
- Fig. 1: eine Halterung für eine Leuchte gemäß einem ersten Ausführungsbeispiel in Rückansicht,
- Fig. 2: die Halterung der Fig. 1 mit einer um 90° verschwenkten Lampenhalterung,
- Fig. 3: eine Halterung für eine Leuchte gemäß einem zweiten Ausführungsbeispiel in Rückansicht sowie
- Fig. 4: die Halterung der Fig. 3 mit einer verschwenkten Lampenhalterung.

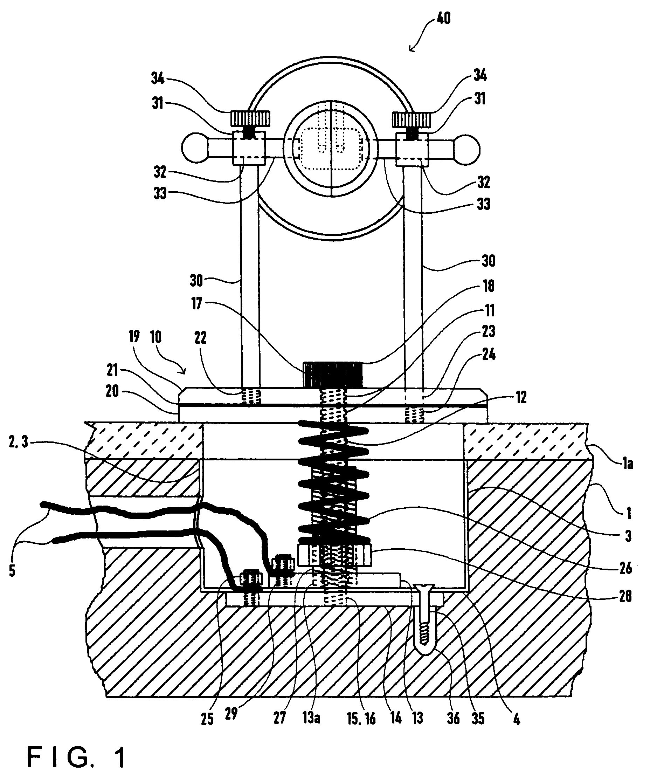

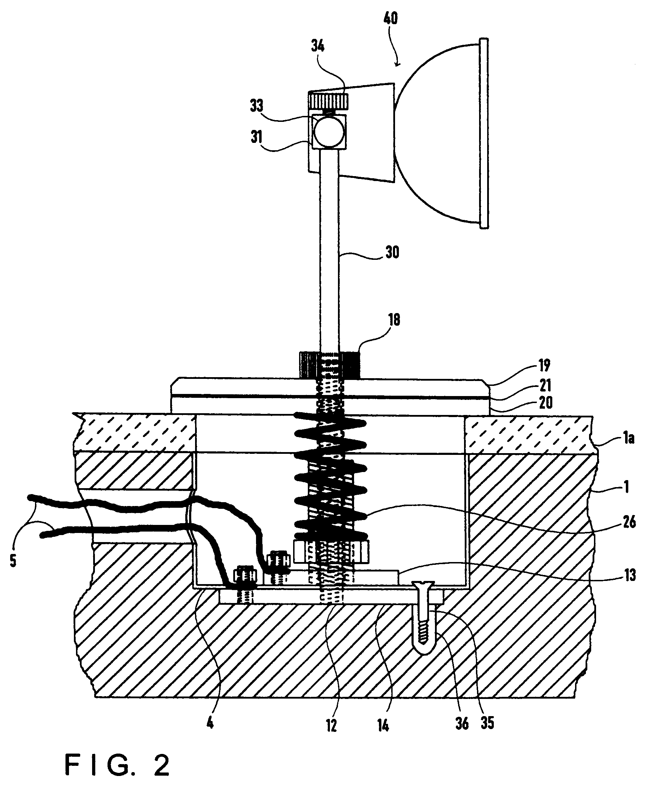

Wie aus den Fig. 1 und 2 ersichtlich, ist in einer Wand, wie insbesondere einer Raumwand 1 mit einer aufgetragenen Putzschicht 1a eine Dose 2 aus Kunststoff eingesetzt, z. B. eine Unterputz- bzw. Schalterdose. Diese Dose 2 besitzt eine zylinderförmige Seitenwand 3 und eine Bodenwand 4. An mindestens einer Stelle in der Bodenwand 4 oder der Seitenwand 3 ist eine Öffnung ausgebildet, durch die Kabel 5 z. B. von einem nicht dargestellten Transformator in einem Verteilerkasten in die Dose 2 führen.

Die Dose 2 ist zum Raum hin durch einen Deckel 10 verschlossen. Bei dem ersten Ausführungsbeispiel befindet sich zentral im Deckel 10 ein Durchgangsloch bzw. eine Bohrung 11. Durch die Bohrung 11 im Deckel 10 ragt ein Schraubbolzen 12 in die Dose 2 hinein und durch diese in Richtung zu deren Bodenwand 4 hindurch. Die Bodenwand 4 aus einem elektrisch isolierenden Material ist zwischen zwei elektrisch leitfähigen Bodenplatten 13 bzw. 14 angeordnet. Zudem ist die zweite Bodenplatte 14 gegenüber der Raumwand 1 isoliert. Dabei ist der Durchmesser der in der Figur oberen Bodenplatte 13 vorzugsweise geringer als der Durchmesser der unteren Bodenplatte 14. Der Schraubbolzen 12 führt berührungsfrei durch eine Bohrung 13a, die in der ersten Bodenwand 13 ausgebildet ist und deren Durchmesser größer als der Durchmesser des Schraubbolzens 12 ist. Danach führt der Schraubbolzen 12 durch eine Bohrung in der Bodenwand 4 hindurch und in ein Gewindeloch 15 hinein, das in der zweiten Bodenplatte 14 ausgebildet ist. Das Gewindeende 16 des Schraubbolzens 12 ist darin fest verschraubt, mit der Bodenwand 4 verklebt oder verschweißt.

Zur stabileren Befestigung der Halterung kann das Gewindeende 16 des Schraubbolzens 12 alternativ z. B. auch durch die Bodenwand 4 der Dose 2 und die zweite Bodenplatte 14 hindurch in einen Dübel, der in der Raumwand 1 unterhalb der Bodenwand 4 sitzt, geführt und darin verschraubt werden (nicht dargestellt).

Das andere Gewindeende 17 des Schraubbolzens 12 ragt aus dem Deckel 10, dessen Außenumfang neben der Dose 2 auf der Putzschicht 1a aufliegt, heraus und weiter durch eine Mutter 18, über die der Deckel 10 gegenüber der zweiten Bodenplatte 14 und/oder der darunter befindlichen Raumwand 1 verspannt ist. Die Spannkraft ist dabei so groß, daß der Deckel 10 einerseits fest an der Raumwand 1 und der Dose 2 anliegt, andererseits aber noch mit geringen Kraftaufwand manuell um die Hauptachse des Schraubbolzens 12 herum drehbar bleibt, um eine von ihm getragene Lampe 40 um seine Längsachse herum verschwenken zu können.

Durch diesen Aufbau ist eine einfache Montage möglich. Insbesondere kann durch die Wahl eines geeignet langen Schraubbolzens 12 oder einer zweiten Bodenplatte 14 mit einem solchen Schraubbolzen 12 eine einfache Anpassung an die Tiefe einer Dose 2 bzw. eines Loches für eine solche Dose 2 erfolgen.

Der Deckel 10 besteht im wesentlichen aus zwei vorzugsweise kreisförmigen, übereinanderliegenden Deckelplatten 19 bzw. 20, die durch eine Beschichtung von deren einander zugewandten Seiten oder eine zwischen diese gelegte, isolierende Scheibe 21 elektrisch voneinander getrennt sind.

In der oberen, ersten Deckelplatte 19 ist nahe deren Umfangsbereichs eine Gewindebohrung 22 ausgebildet. In diese Gewindebohrung 22 ist das eine Ende einer ersten, elektrisch leitfähigen Stange 30 eingeschraubt. Nahe des insbesondere gegenüberliegenden Umfangsbereichs ist in der ersten Deckelplatte 19 eine weitere Bohrung 23 ausgebildet, deren Innenseite vorzugsweise elektrisch isolierend beschichtet ist. Alternativ kann auch eine Kunststoffhülse eingesetzt sein. Zu dieser Bohrung 23 im wesentlichen fluchtend ist in der unteren, zweiten Deckelplatte 20 eine Gewindebohrung 24 ausgebildet. Durch die Bohrung 23 führend ist in diese Gewindebohrung 24 eine zweite, elektrisch leitende Stange 30 eingeschraubt. An den anderen Enden der beiden Stangen 30 ist eine Leuchte bzw. Lampenfassung 40 mit einer Lampe gelagert.

Die Stromversorgung der Lampe erfolgt über eines der beiden Kabel 5 (als Spannungsquelle) an die zweite Bodenplatte 13 mittels einer Anschlußschraube 25, wodurch ein Pol, z.B. der Pluspol gebildet ist. Der Strom kann über das Kabel 5 und die zweite Bodenplatte 13 in den Schraubbolzen 12 und durch diesen hindurch fließen. Der obere Abschnitt zwischen dem Schraubbolzen 12 und der Bohrung 11 in der unteren Deckelplatte 20 ist elektrisch isoliert ausgebildet, so daß der Strom nicht in die untere Deckelplatte 20 fließen kann. Vom oberen Endabschnitt des Schraubbolzens 12 fließt der Strom zur oberen Deckelplatte 19 hinein. Von dort geht der Stromfluß zur ersten Stange 30 weiter und über diese zum entsprechenden Pol der Lampenfassung 40 hin.

Von der Lampenfassung 40 aus fließt der Strom über die zweite Stange 30 zu der unteren Deckelplatte 20 (als Gegenpol, z.B. hier den Minuspol) hin, wobei die Wandung der Bohrung 23 gegenüber der Stange 30 isoliert oder beabstandet ist. Um einen Stromfluß von der unteren Deckelplatte 20 aus zur ersten, oberen Bodenplatte 13 hin zu ermöglichen, ist eine elektrisch leitfähige schraubenfeder 26 zwischen diesen so lose verspannt eingesetzt, daß sie einerseits eine Verdrehung des Deckels 10 um die Längsachse des Schraubenbolzens 12 herum ermöglicht, andererseits aber stets einen elektrischen Schleifkontakt zwischen den Platten 13 bzw. 20 gewährleistet. Bevorzugt ist die Schraubenfeder 26 konzentrisch um den Schraubenbolzen 12 herum zwischen den Platten 20 und 13 eingesetzt.

Damit die Schraubenfeder 26 keinen Kurzschluß mit dem Schraubenbolzen 12 ausbildet, sind diese gegeneinander isoliert oder zueinander beabstandet angeordnet. Zum Beispiel kann der Außendurchmesser der Schraubenfeder 26 bei einer einfachen, nicht dargestellten Ausführungsform dem Innendurchmesser der Bohrung 13a in der ersten Bodenplatte 13 entsprechen, so daß die Schraubenfeder 26 in dieser Bohrung 13a verschiebungsfest gelagert ist. Dabei müßte der Innendurchmesser der Schraubenfeder 26 jedoch deutlich größer als der Außendurchmesser des Schraubenbolzens 12 sein.

In einer bevorzugten Ausführungsform ist in die Bohrung 13a der ersten Bodenplatte 13 eine elektrisch isolierende Hülse 27, die ein Außengewinde aufweist und an ihrem Außenumfang leitfähig beschichtet ist, eingesetzt, z. B. eingeschraubt. Alternativ können zwei Hülsen eingesetzt werden, eine innere isolierende und eine äußere leitfähige. Die Spannkraft der Feder 26 ist über eine leitfähige Mutter 28 einstellbar, die zwischen dem einen Ende der Schraubenfeder 26 und der ersten Bodenplatte 13 auf die Hülse aufgeschraubt ist.

Somit kann der Strom von der unteren Deckelplatte 20 aus über die an deren Unterseite schleifende Feder 26, die Mutter 28 und den Außenumfang der Hülse 27 in die erste Bodenplatte 13 abfließen. An dieser ist wiederum das zweite Kabel 5 angeschlossen, z. B. über eine Schraube 29 angeschraubt, wodurch der Stromkreis geschlossen ist.

Die Lagerung der Lampenfassung 40 an den beiden Stangen 30 erfolgt z. B. über zwei leitfähige Lagerbuchsen 31, die an den freien Enden der Stangen 30 befestigt sind und die zueinander fluchtende Bohrungen 32 aufweisen. Durch die Bohrungen 32 führt jeweils eine leitfähige Lagerstange 33, zwischen denen die Lampenfassung 40 befestigt und angeschlossen ist, wobei die Lagerstangen 33 in den Bohrungen um deren Längsachse sowohl verschwenkbar als auch über z. B. Schrauben 34 festlegbar sind.

Bei diesem Aufbau ist eine Lampe in jeder Richtung um die Lagerstange 33 verschwenkbar und zudem um die Längsachse des Schraubenbolzens 12 herum beliebig weit über den Vollkreis (360°) hinaus drehbar. So kann in der Dose 2 auch ein kleiner Gleichstrom- oder Schrittmotor (nicht dargestellt) integriert sein, um den Deckel 10 mit der aufgesetzten Lampenfassung 40 langsam rotierend oder schrittweise anzutreiben, um besondere Lichteffekte mit variierende Abstrahlwinkeln zu erzielen. Dies kann auch durch Fernsteuerung erfolgen, wobei ein entsprechender Infrarot-Kleinempfänger in der Dose 2 integriert sein kann.

Bei einer alternativen, nicht dargestellten Bauweise ist anstelle der Bodenwand 4 der Wandanschlußdose 2 zwischen den beiden Bodenplatten 13 und 14 eine isolierende Beschichtung oder Einlage angeordnet werden. Die Befestigung der Bodenplatten 13 und 14 in einem Loch in der Raumwand 1 könnte nach dem Anschließen der Spannungsquelle über die Kabel 5 z. B. über Schrauben 35 und Dübel 36 erfolgen. Der Dübel isoliert die Schraube 35 dabei gegenüber der Raumwand 1. Danach würden der Schraubenbolzen 12 in die Bodenplatten 13 und 14 eingesetzt. Über diesem würden die Hülse 27 mit der Mutter 28 und die Schraubenfeder 26 angeordnet, bevor die Deckelelemente 19 - 21 aufgesetzt und mittels der Mutter 18 verspannt werden.

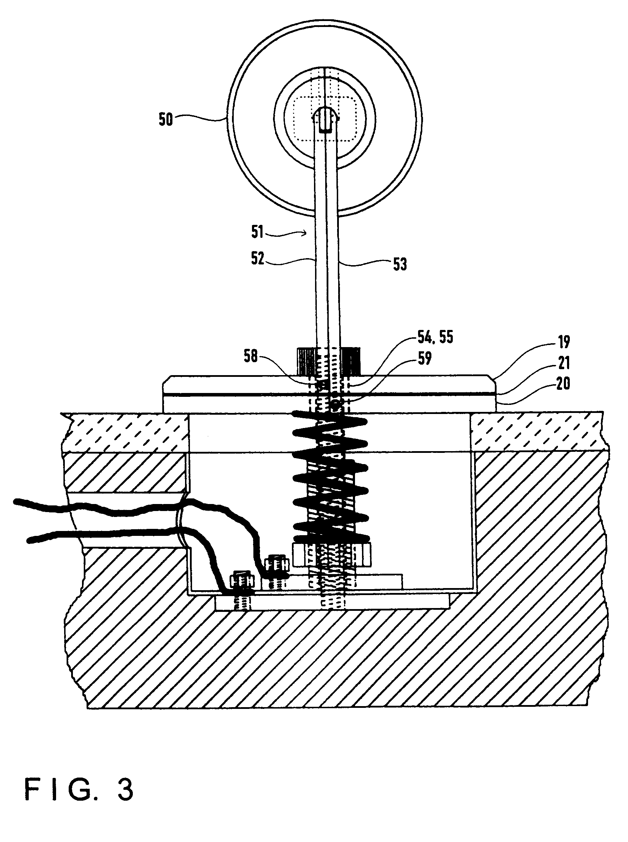

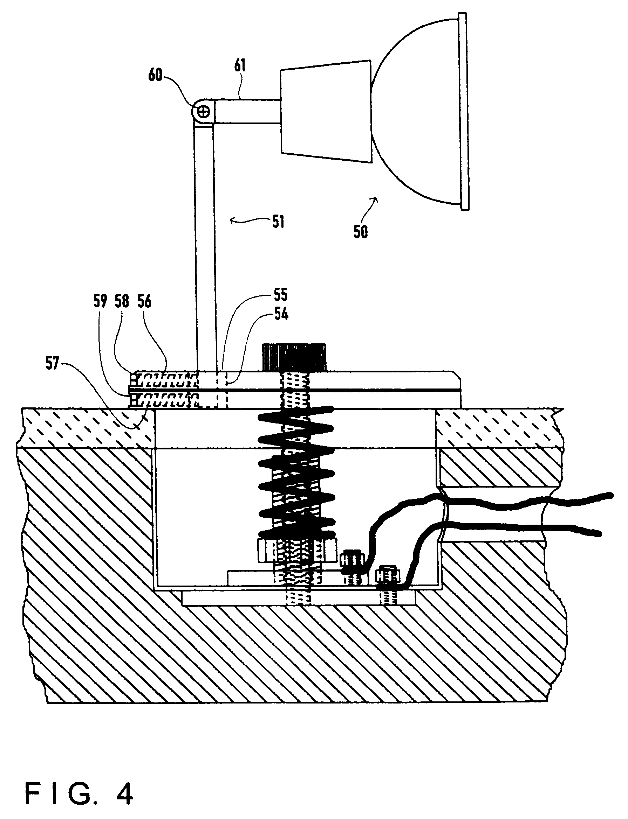

Bei einem zweiten Ausführungsbeispiel gemäß Fig. 3 und 4 ist ein Lampensockel 50 an nur einer mehrgliedrigen Stange 51 gelagert. Die Stange 51 besteht im wesentlichen aus zwei parallel zueinander geführten leitfähigen Stäben 52 bzw. 53, die elektrisch voneinander isoliert sind. Durch die beiden Deckelplatten 19 und 21 führt vorzugsweise in deren Umfangsbereich eine Bohrung 54. In dieser Bohrung 54 sind eine elektrisch isolierende Hülse 55 und in dieser die Stange 51 eingesetzt.

Zum Bereitstellen der elektrischen Verbindung zwischen den beiden Deckelplatten 19 und 20 zu je einem der leitfähigen Stäbe 52 bzw. 53 führt vom Umfang der Deckelplatten 19 und 20 aus je eine Gewindebohrung 56 bzw. 57 zu der Bohrung 54 hin. Durch diese Bohrungen 56 und 57 und Bohrungen in der Hülse 55 führt jeweils eine elektrisch leitfähige Schraube 58 bzw. 59 zu dem entsprechenden leitfähigen Stab 52 bzw. 53 der Stange 51 hin. Damit wird die Stange 51 einerseits fest eingespannt und andererseits mit Strom versorgt.

Am anderen Ende der Stange 51 ist die Lampenfassung 50, wie dargestellt, über ein Gelenk 60 und eine weitere Stange 61 verschwenkbar angekoppelt. Damit ist auch bei diesem Aufbau eine optimale Ausrichtung der Lampe bzw. der Lampenfassung 61 möglich.

Vorzugsweise dient die Lampenfassung 40 bzw. 50 zur Aufnahme einer Halogen-Niedervoltlampe. Auch kann der Lampenschirm bereits Bestandteil der Lampe sein. Alternativ ist aber auch der Einbau einer Schraubfassung möglich. Zur Befestigung der vorstehend beschriebenen Dosen 2 in einer Wand 1 oder eines Deckels 10 in einer Dose 2 können z. B. auch krallenartige Spanneinrichtungen oder andere Befestigungsmittel eingesetzt werden, wie sie von Steckdosen oder Schaltern bekannt sind, die üblicherveise in solche Dosen eingesetzt werden.

Auch können durchmesserkleinere Zusatz- bzw. Einsatzdosen mit solchen Befestigungsmitteln wie Krallen bereitgestellt werden, die z. B. in bestehende Dosen oder Löcher eingesetzt werden können, bevor die Halterung für Leuchten eingesetzt wird, wenn die bestehenden Dosen z. B. nicht fest oder stabil genug in der Wand eingesetzt sind.

Derartige Halterungen können auch an anderen Stellen, z. B. für Leuchten in Möbeln verwendet werden. Anstelle einer Leuchte kann zudem auch eine andere elektrische Einrichtung eingesetzt werden, wie beispielsweise ein Ventilator. Auch eine Kamera oder ein Lautsprecher können derart angeschlossen werden, wobei deren Ausrichtung (zur Bildaufnahme oder Schallabgabe) manuell beliebig drehbar oder durch einen Kleinmotor schrittweise oder rotierend veränderbar ist, z.B. zu einer Vorfeldbeobachtung, bevorzugt mittels einer Fernsteuerung oder einem Steuerprogramm.

## Patentansprüche

1. Halterung für eine elektrische Einrichtung, insbesondere eine Niedervolt-Leuchte an einer Aufnahmeöffnung, insbesondere einer Wandanschlußdose,
dadurch **gekennzeichnet,**
daß zum Verschließen der Aufnahmeöffnung (2) ein Deckel (10) vorgesehen ist, der an zumindest einer im wesentlichen in der Aufnahmeöffnung (2) angeordneten Halteeinrichtung (12) angesetzt und drehbar gelagert ist, wobei über die Halteeinrichtung (12) und zumindest einen Teil des Deckels (10) ein erster Pol der elektrischen Einrichtung (40; 50) an einer Spannungsquelle (5) angekoppelt ist.

2. Halterung nach Anspruch 1,
dadurch **gekennzeichnet,**
daß ein zweiter Pol der elektrischen Einrichtung (40; 50) über eine elastische Einrichtung (26) zum Ausbilden einer Schleifkontaktverbindung an der Spannungsquelle (5) angekoppelt ist, insbesondere über eine Schraubenfeder (26), deren Längsachse im wesentlichen achsgleich mit der der Halteeinrichtung (12) ist.

3. Halterung nach einem der vorhergehenden Ansprüche,
dadurch **gekennzeichnet,**
daß der Deckel (10) aus einem ersten und einem zweiten elektrisch leitfähigen Deckelteil (19 bzw. 20) besteht, die durch eine Isolierung (21) getrennt und vorzugsweise übereinanderliegende Platten sind.

4. Halterung nach Anspruch 3,
dadurch **gekennzeichnet,**
daß das erste Ende der Halteeinrichtung (12) mit einer im wesentlichen zentralen Öffnung (11) in den Deckelteilen (19 und 20) gekoppelt ist, wobei die Halteeinrichtung (12) mit dem diesem Ende zugewandten Deckelteil (19) elektrisch verbunden ist.

5. Halterung nach einem der vorhergehenden Ansprüche,
dadurch **gekennzeichnet,**
daß das zweite Ende der Halteeinrichtung (12) mit zwei elektrisch leitfähigen, gegeneinander isolierten Bodenplatten (13 bzw. 14) gekoppelt ist, wobei eine elektrische Verbindung nur zur diesem Ende der Halteeinrichtung (12) zugewandten zweiten Bodenplatte (14) besteht, die an den ersten Pol der Spannungsquelle (5) angeschlossen ist.

6. Halterung nach einem der Ansprüche 2 bis 5,
dadurch **gekennzeichnet,**
daß die elastische Einrichtung (26) durch eine innen isolierende und außen leitfähige Hülse (27) von der Halteeinrichtung (12) getrennt ist.

7. Halterung nach einem der Ansprüche 5 oder 6,
dadurch **gekennzeichnet,**
daß die elastische Einrichtung (26) eine Schraubenfeder ist, die mittels eines Schraubenbolzens als Halteeinrichtung (12) zwischen der zweiten Deckelplatte (20) und der ersten Bodenplatte (19) eingespannt ist, wobei die erste Bodenplatte (19) mit dem zweiten Pol der Spannungsquelle (5) verbunden ist.

8. Halterung nach einem der Ansprüche 3 bis 7,
dadurch **gekennzeichnet,**
daß die elektrische Einrichtung (40; 50) über zumindest zwei Stangen (30) mit dem ersten bzw. dem zweiten Deckelteil (19 bzw. 20) mechanisch und elektrisch verbunden ist, wobei die erste Stange (30) mit dem ersten Deckel (19) elektrisch verbunden ist und die zweite Stange (30) durch eine Aussparung (23) im ersten Deckelteil (19) führend und diesem gegenüber isoliert mit dem zweiten Deckelteil (21) elektrisch verbunden ist.

9. Halterung nach einem der Ansprüche 3 bis 7,
dadurch **gekennzeichnet,**
daß die elektrische Einrichtung (40; 50) über einen Träger (51) mechanisch und elektrisch über eine Öffnung (54) an den Deckelteilen (19 bzw. 20) angekoppelt ist, wobei der Träger (51) aus zumindest zwei im wesentlichen parallel zueinander geführten und gegeneinander isolierten Trägerelementen (52 bzw. 53) besteht, von denen eines mit dem ersten Deckelteil (19) und das andere mit dem zweiten Deckelteil (21) elektrisch verbunden ist.

10. Halterung nach einem der vorhergehenden Ansprüche,
dadurch **gekennzeichnet,**
daß die Aufnahmedose (2) eine Schalter- oder Unterputzdose in einer Decke oder Wand (1) ist, in der Stromkabel als Spannungsquelle (5) enden.
